# EUROPEAN PATENT SPECIFICATION

(11) **EP 1 755 335 B1**
(45) Date of publication and mention of the grant of the patent: **12.06.2013**
(21) Application number: 06253856.6
(22) Date of filing: 24.07.2006
(51) Int. Cl.: H04N 5/63, H04N 3/185

(54) **Power supply control device**
Stromversorgungssteuervorrichtung
Dispositif de contrôle d'alimentation

(30) Priority: 16.08.2005 KR 20050074886
(43) Date of publication of application: 21.02.2007
(73) Proprietor: LG Electronics Inc., Youngdungpo-gu Seoul (KR)
(72) Inventor: Shin, Jong Sik, Goomi-si, Gyeongsangbook-do (KR)
(74) Representative: Hale, Peter

(56) References cited:
- EP-A2- 0 453 180
- EP-A2- 0 521 419
- US-A- 3 906 333
- US-A- 4 500 923

## Description

The present invention relates to a power control device. It more particularly relates to a power control device capable of operating an electronic device at a low voltage state by controlling a power supply in accordance with an input voltage.

A typical example of an electronic device is a video display device such as TV and monitor.

In general, an operational voltage range of a video display device is different according to the mains voltage standard used in any given country. In other words, an image display device is normally operated above about 80V in the areas of the US and Japan of a 110V voltage standard, and the video display device is operated about 180V in the areas of Korea and European countries having a 220V voltage standard.

A typical power supply device for providing such DC voltage is described by US 4 500 923.

However, recently, electronic devices have been designed to operate on both 110V and 220V voltage supplies. Therefore, the electronic devices are operated above about 80V.

A power control device of a representative video display device will be described with reference to the accompanying drawings.

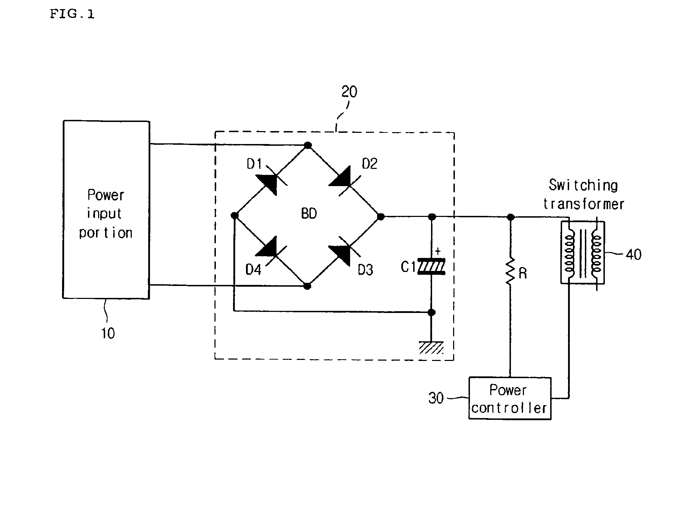

Fig. 1 is a schematic of a prior art power control device.

As shown in Fig. 1, a prior art power control device comprises: a power input portion 10 for supplying a power; a rectifier 20 for rectifying and smoothing power supplied through the power input portion 10; a power control unit 30 receiving a rectified and smoothed voltage by the rectifier 20 to control power; and a transformer 40 receiving a rectified and smoothed voltage by the rectifier 20 to deliver power supplied to the first side into the second side under the control of the power control unit 30.

Here, the rectifier 20 includes a bridge rectifier BD rectifying input power through the power input portion 10 and a capacitor C1 for smoothing the rectified voltage through the bridge rectifier BD.

In addition, the one end of the switching transformer 40 is connected to the output terminal of the rectifier 20, and the other end is connected to the power control unit 30 to include a resistor R for supplying a rectified and smoothed voltage to the power control unit 30 through the rectifier 20.

The prior art power control device having the above structure operates as follows;

Power is received from the power input portion 10, and it is rectified through the bridge rectifier BD regardless of the polarities of the positive and negative half-cycles of the voltage input. The rectified voltage goes through the power input portion 10, charges capacitor C1.

In addition, a rectified and smoothed voltage is provided to the power control unit 30 through the resistor R.

Rectified power through the rectifier 20 is not just provided to the transformer 40, but is also connected to the power control unit 30 to supply rectified power from the rectifier 20 to the second side under the control of the power controller 30.

However, there is a problem that, if the voltage of the input power falls below 80V, the power controller 30 does not operate, or else the image display device is turned off by the operation of an overload circuit (not shown). Even if the power voltage goes back to normal, a user must re-operate the power key to make the image display device operate.

The present invention seeks to provide an improved power control device.

Embodiments of the present invention can provide a power control device controlling a power capable of operating electronic devices normally even if a voltage of an input power is provided irregularly.

One aspect of the invention provides a power control device in accordance with claim 1.

Other aspects of the invention are defined in the sub-claims.

Embodiments of the invention will now be described by way of non-limiting example only, with reference to the drawings, in which:

Fig. 1 is a schematic of a prior art power control device;

Fig. 2 is a schematic showing a power control device in accordance with the present invention;

Fig. 3 is a schematic showing power flow when a power control device according to the present invention is operated at a higher voltage; and

Fig. 4 is a schematic showing power flow when a power control device according to the present invention operates at a lower voltage.

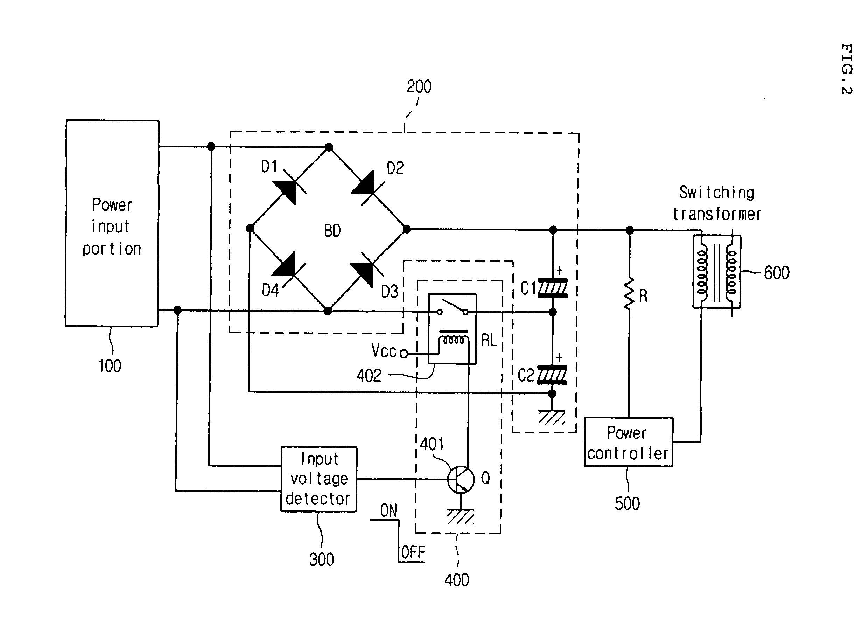

Referring now to Fig. 2, a power control device comprises: a power input portion 100 to which power is supplied; an input voltage detector 300 for detecting the voltage of power input from the power input unit 100; a rectifier 200 for rectifying and smoothing power input from the power input portion 100 and a switching portion 400 controlling the operations of the rectifier 200 in compliance with the detecting result detected by the input voltage detector 300.

Power output from the rectifier 200 is provided to the power control unit 500 and the switching transformer 600.

The primary winding of the switching transformer 600 has one end connected to the power control unit 500 and another end connected to the rectifier 200 to provide power to the electronic devices. In addition, resistor R has one end connected to the rectifier 200 and the other end connected to the power control unit 500 to provide power rectified and smoothed in the rectifier 200 to the power control unit 500.

Here, the rectifier 200 includes a bridge rectifier BD for rectifying a voltage input through the power input portion 100, and first and second capacitors C1 and C2 for receiving the power during positive and negative half-cycles of a voltage input through the power input portion 100 in compliance with a switching operation of the switching portion 400 to charge/discharge a voltage for smoothing it. The bridge rectifier BD uses a plurality of rectifying diodes. The first and the second capacitors C1 and C2 may use a plurality of capacitors, respectively.

In addition, the switching portion 400 includes a switching portion 401 which turns on and off in compliance with the voltage level detected by the input voltage detecting portion 300, and a rectification switching unit 402 which turns on and off in compliance with the switching unit 401 to change the voltage output through the rectifying unit 200 by rectification and smoothing.

In the present embodiment, the switching unit 401 constitutes a transistor and the rectification switching unit 402 is constituted by a relay. It is convenient, but not essential, that a relay is used in the rectification switching unit 402.

The operation of a power control device in accordance with the invention now will be described.

First, if power is supplied through the power input portion 100, the input voltage detector 300 determines whether the power input through the power input portion 100 is greater than, smaller than, or the same as, a preset voltage (for example, 80V).

In other words, according to the detection result of the input voltage detector 300, if the input voltage received through the power input portion 100 is greater than, or the same as, the preset voltage, a low signal is applied to the base of a switching unit 401 of the switching portion 400, and the switching unit 401 maintains the off-state. Moreover, as the switching unit 401 maintains the off-state, the rectification switching unit 402 assumes the off-state.

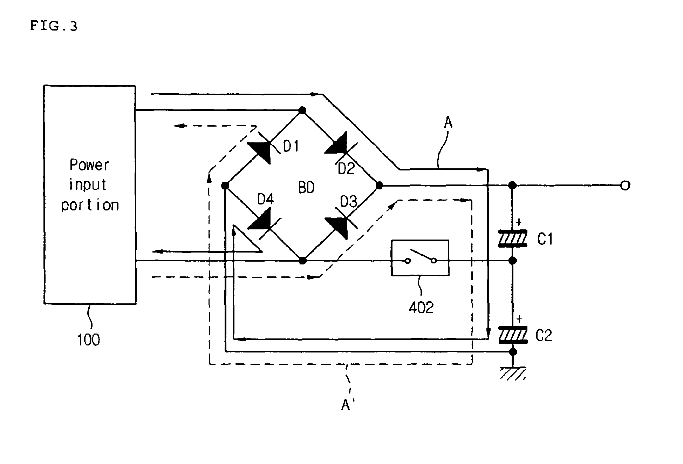

Accordingly, as shown in Fig. 3, if the rectifying switch unit 402 is in the off-state, the input voltage received from the power input portion 100 is provided via the path shown by solid line A during a positive half-cycle of the AC cycle to charge the first and the second capacitors C1 and C2. The voltage to which the first and the second capacitor C1 and C2 become charged, is provided to the power control unit 500 and the switching transformer 600 via the resistor R to supply power to the electronic devices (not shown).

In addition, the input voltage input from the power input portion 100 is provided via dotted line path in direction A' during a negative (-) half-cycle to charge the first and the second capacitors C1 and C2. The voltage to which the first and second capacitors C1 and C2 are charged is provided to the power control unit 500 and the switching transformer 600 via resistor R to supply power to electronic devices.

Meanwhile, if the voltage detected by the input voltage detecting unit 300 is less than a preset voltage (for example, 80V), the input voltage detecting unit 300 provides a high signal to the base of the switching unit 401 to turn the switching unit 401 on.

In addition, as the switching unit 401 is turned on, the rectification switch unit 402 changes to the turned-on state.

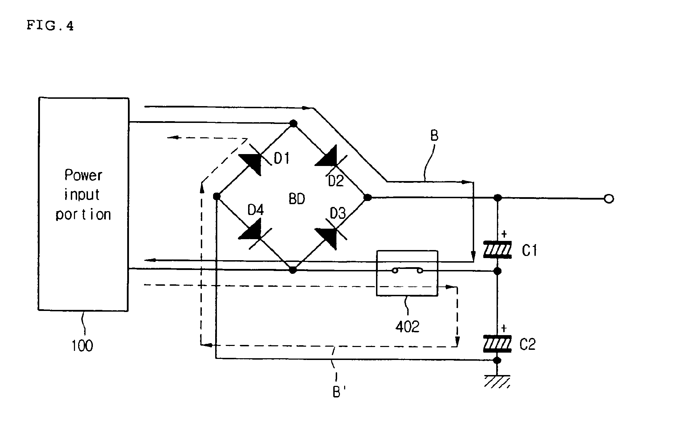

Referring to Fig. 4, power is provided via the power input portion 100 during a positive (+) half-cycle to charge the first capacitor C1. The power stored in the first capacitor C1 is provided to the power control unit 500 and the switching transformer 600 to provide a power supply for the electric devices, not shown.

In addition, power is provided via the path shown by dotted line B' during a negative (-) half-cycle through the power input unit 100 to charge the second capacitor C2, and power stored in the second capacitor C2 is provided to the power control unit 500 and the transformer 600 to perform supply of power.

Accordingly, as a twice rectified and smoothed voltage is stored in the first and the second capacitors C1 and C2, the stored voltage is applied to the power control unit 500 and the switching transformer 600 via the resistor R.

Accordingly, even if the voltage supplied as input power is lower than the preset voltage, the power control device supplies a power of more than the predetermined voltage so that the electronic device can maintain a continuous use state.

As described above, a power control device in accordance with the present invention detects an input voltage. If the detected voltage is greater than the predetermined voltage, normal operation is maintained, and if the detected voltage is less than the pre-established voltage, the voltage automatically increases to operate the electronic devices at the necessary voltage.

## Claims

1. A power control device comprising:
a power input portion (100) arranged to be supplied with AC power;
rectifier means (200) comprising a rectifier (80) and two series capacitors (C1, C2), the rectifier means (200) arranged to rectify AC power supplied from the power input portion and to provide a smoothed DC voltage output across the two series capacitors (C1, C2);
an input voltage detector (300) arranged to detect the voltage of power input from the power input portion(100); and
a switching means (400) arranged to be controlled such that, depending on the voltage detected by the input voltage detector (300), the output of the rectifier means is connected across both capacitors (C1, C2) during both half cycles of the AC power, or across one capacitor (C1) during a first half cycle and across the other capacitor during the next half cycle.

2. A power control device according to claim 1, wherein the capacitors comprise plural capacitors, respectively.

3. The power control device according to claim 1 or 2, wherein the rectifier means (200) comprises a plurality of diodes (D1,D2,D3,D4) arranged to control the direction of current in accordance with positive and negative half-cycles of the AC power.

4. The power control device of any preceding claim, wherein the switching means (200) is arranged to turn on if the voltage detected by the input voltage detector (300) is less than a predetermined voltage.

5. The power control device of any preceding claim, wherein the switching means (200) consists of a transistor(401) and a relay (402).

## Patentansprüche

1. Stromsteuervorrichtung mit:
einem Stromeinspeisungsteil (100), der dazu ausgelegt ist, mit Wechselstrom versorgt zu werden;
einer Gleichrichtereinrichtung (200) mit einem Gleichrichter (80) und zwei Reihenkondensatoren (C1, C2), wobei die Gleichrichtereinrichtung (200) dazu ausgelegt ist, den von dem Stromeinspeisungsteil gelieferten Wechselstrom gleichzurichten und an den beiden Reihenkondensatoren (C1, C2) einen geglätteten Gleichspannungsausgang zu liefern;
einem Eingangsspannungsdetektor (300), der dazu ausgelegt ist, die Spannung des Stromeingangs von dem Stromeinspeisungsteil (100) zu ermitteln; und
einer Schalteinrichtung (400), die dazu ausgelegt ist, so gesteuert zu werden, dass, abhängig von der von dem Eingangsspannungsdetektor (300) ermittelten Spannung, der Ausgang der Gleichrichtereinrichtung während der beiden Halbzyklen des Wechselstroms an beide Kondensatoren (C1, C2), oder während eines ersten Halbzyklus an einen Kondensator (C1) und während des nächsten Halbzyklus an den anderen Kondensator angelegt wird.

2. Stromsteuervorrichtung nach Anspruch 1, wobei die Kondensatoren jeweils mehrere Kondensatoren aufweisen.

3. Stromsteuervorrichtung nach Anspruch 1 oder 2, wobei die Gleichrichtereinrichtung (200) eine Mehrzahl von Dioden (D1, D2, D3, D4) aufweist, die dazu ausgelegt sind, die Stromrichtung gemäß positiven und negativen Halbzyklen des Wechselstroms zu steuern.

4. Stromsteuervorrichtung nach einem der vorhergehenden Ansprüche, wobei die Schalteinrichtung (400) dazu ausgelegt ist, sich einzuschalten, wenn die von dem Eingangsspannungsdetektor (300) ermittelte Spannung geringer als eine vorgegebene Spannung ist.

5. Stromsteuervorrichtung nach einem der vorhergehenden Ansprüche, wobei die Schalteinrichtung (400) aus einem Transistor (401) und einem Relais (402) besteht.

## Revendications

1. Dispositif de commande de puissance, comprenant :
une partie d'entrée d'énergie électrique (100) agencée pour être alimentée en CA ;
des moyens redresseurs (200) comprenant un redresseur (80) et deux condensateurs en série (C1, C2), les moyens redresseurs (200) étant agencés pour redresser une alimentation en CA fournie à partir de la partie d'entrée d'énergie électrique et pour fournir une tension continue lissée de sortie à travers les deux condensateurs en série (C1, C2) ;
un détecteur de tension d'entrée (300) agencé pour détecter la tension d'énergie électrique entrée à partir de la partie d'entrée d'énergie électrique (100) ; et
des moyens de commutation (400) agencés pour être commandés de sorte que, en fonction de la tension détectée par le détecteur de tension d'entrée (300), la sortie des moyens redresseurs soit connectée à travers les deux condensateurs (C1, C2) durant les deux demi-cycles de l'alimentation en CA, ou à travers un condensateur (C1) durant un premier demi-cycle et à travers l'autre condensateur durant le demi-cycle suivant.

2. Dispositif de commande de puissance selon la revendication 1, dans lequel les condensateurs comprennent plusieurs condensateurs, respectivement

3. Dispositif de commande de puissance selon la revendication 1 ou 2, dans lequel les moyens redresseurs (200) comprennent une pluralité de diodes (D1, D2, D3, D4) agencées pour commander le sens du courant conformément à des demi-cycles positif et négatif de l'alimentation en CA.

4. Dispositif de commande de puissance selon une quelconque revendication précédente, dans lequel les moyens de commutation (200) sont agencés pour s'allumer si la tension détectée par le détecteur de tension d'entrée (300) est inférieure à une tension prédéterminée.

5. Dispositif de commande de puissance selon une quelconque revendication précédente, dans lequel les moyens de commutation (200) sont constitués d'un transistor (401) et d'un relais (402).
